# EUROPÄISCHE PATENTSCHRIFT

(11) **EP 0 611 496 B1**
(45) Veröffentlichungstag und Bekanntmachung des Hinweises auf die Patenterteilung: **03.01.1996**
(21) Anmeldenummer: 92922529.0
(22) Anmeldetag: 27.10.1992
(51) Int. Cl.: H02M 7/538

(54) **ÜBER EINEN TRANSFORMATOR MIT WECHSELSTROM HEIZBARE RÖHRE**
AMPLIFYING TUBES HEATED BY TRANSFORMED A.C.
TUBE CHAUFFABLE PAR COURANT ALTERNATIF AU MOYEN D'UN TRANSFORMATEUR

(30) Priorität: 09.11.1991 DE 4136879
(43) Veröffentlichungstag der Anmeldung: 24.08.1994
(73) Patentinhaber: ANT Nachrichtentechnik GmbH, D-71522 Backnang (DE)
(72) Erfinder: OHMS, Franz, D-7163 Oberrot (DE)
(86) Internationale Anmeldenummer: DE9200893
(87) Internationale Veröffentlichungsnummer: WO9309593

(56) Entgegenhaltungen:
- EP-A- 0 006 785
- US-A- 4 257 089
- US-A- 4 464 611
- IEEE CONF. REC. OF THE 1988 18TH POWER MODULATOR SYMPOSIUM, Seiten 269-273; R.A. Gardenghi : "Filament Considerations For High Stability Radar"

## Beschreibung

Die Erfindung geht aus von einer Anordnung gemäß dem Oberbegriff des Patentanspruchs 1.

Leistungsverstärkerröhren insbesondere Wanderfeldröhren werden üblicherweise über Strombegrenzungsregler im Heizkreis betrieben, damit der Heizstrom nicht auf unzulässige Werte ansteigen kann. Solche Strombegrenzungsregler im Heizkreis sind beispielsweise bekannt aus US 4,267,487 oder aus den Prospekten Space Amplifier at 20/30 GHz, ANT 15 06 aE, 05.84; Travelling Wave Tube Amplifiers (TWTAs) for Space Applications, ANT 776 841,09.90 der Firma ANT Nachrichtentechnik GmbH.

Bei einem aus der US 4,257,089 bekannten Spannungsregler wird die Frequenz eines Gegentakt-Schaltreglers in Abhängigkeit einer ausgangsseitigen Fehlerspannung variiert. Bei einer hohen Fehlerabweichung wird somit weniger Energie zum Verbraucher übertragen.

Bei der Begrenzungseinrichtung gemäß US 4,267,487 wird die Röhre mit Gleichstrom gespeist. Wechselanteile werden dadurch unterdrückt, daß die Spannung am Heizfaden erfaßt wird und ein Gegenkopplungssignal erzeugt wird, welches eine Impedanz im Versorgungskreis regelt.

Bei einer aus IEEE Conf. Rec. of the 1988 18th Power Modulator Symposium, Seiten 269-273 "Filament Considerations for high Stability Radar" bekannten Einrichtung werden Schwankungen der Heizspannung infolge von Frequenzänderungen des Heizstromes durch eine besondere Wickelgeometrie der Sekundärwicklung eines HV Transformators unterdrückt.

Aufgabe der Erfindung ist es eine Strombegrenzung für die Anordnung gemäß dem Oberbegriff des Anspruchs 1 zu schaffen, die wenig Zusatzaufwand verursacht und die insbesondere geeignet ist den Heizstrom bei kalter Heizwendel zu begrenzen. Diese Aufgabe wird durch das kennzeichnende Merkmal des Anspruchs 1 gelöst. In den Unteransprüchen sind Ausgestaltungen aufgezeigt.

Die Erfindung beruht auf folgenden Erkenntnissen: Der Transformator im Heizkreis einer Röhre, z.B. einer Wanderfeldröhre, besitzt eine Streuinduktivität, die, insbesondere bei einem Transformator, der auf Hochspannungspotential liegt, beträchtliche Werte annehmen kann. Wählt man nun in der Anfangsphase der Röhrenheizung, bei der die Heizwendel noch kalt ist und einen geringen Kaltwiderstand von z.B. 1 Ohm hat, für den Heizwechselstrom eine relativ hohe Frequenz von z.B. 200 kHz, so fällt ein Großteil der Heizwechselspannung an der Streuinduktivität ab. Eine zusätzliche Strombegrenzung, z.B. in Form eines Serienreglers, zur Begrenzung des Heizstromes auf unzulässige Werte ist dann nicht mehr notwendig. Im aufgeheizten Zustand weist die Heizwendel einen höheren Widerstand von z.B. 10 Ohm auf und die Frequenz des Heizwechselstromes kann dann auf einen niedrigeren Nominalwert von z.B. 10 kHz herabgesetzt werden. Der hohe Anfangswert der Frequenz des Heizwechselstroms wird vorteilhaft auf die Größe der Streuinduktivität des Transformators so abgestimmt, daß in jedem Falle kein unzulässig hoher Heizstrom fließen kann.

In einer weiteren Ausgestaltung kann der Transformator im Heizkreis durch zwei elektronische Gegentaktschalter zu einem Gegentakt-Wechselrichter ergänzt werden. Die Ansteuerung dieser Schalter kann vorteilhafterweise in einen kundenspezifischen Schaltkreis (ASIC) mitintegriert werden, so daß der Zusatzaufwand für die Realisierung der Erfindung gering ist.

Die Frequenz des Heizwechselstroms kann in einer Weiterbildung in Stufen herabgesetzt werden, beispielsweise durch einen über einen Zeitgeber frequenzgesteuerten Oszillator oder einen Festoszillator, dessen Ausgangssignal über einen Frequenzteiler mit zeitabhängig gesteuerten Teilerverhältnissen zu den Steuereingängen der elektronischen Schalter geleitet ist.

Anhand der Zeichnungen werden nun Ausführungsbeispiele der Erfindung näher erläutert. Es zeigen
Figur 1 ein Prinzipschaltbild für die erfindungsgemäße Strombegrenzung,
Figur 2 ein erstes Beispiel zur Erzeugung von Steuersignalen für elektronische Gegentaktschalter und
Figur 3 ein zweites Beispiel zur Erzeugung von Steuersignalen für elektronische Gegentaktschalter.

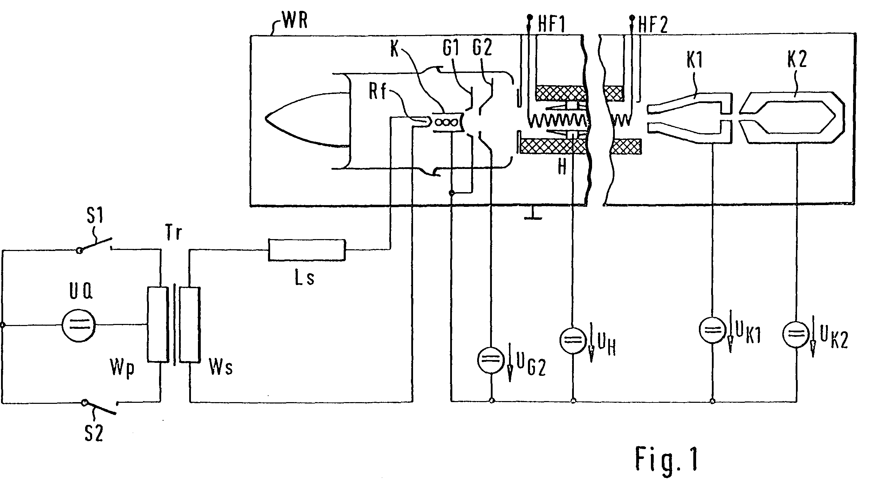

In Figur 1 ist der Transformator Tr im Heizkreis einer Wanderfeldröhre WR mit seiner Streuinduktivität Ls im Sekundärkreis dargestellt. Der Heizfaden der Wanderfeldröhre liegt in Serie zu dieser Streuinduktivität Ls und ist als ohmscher Widerstand Rf repräsentiert. Der Heizwechselstrom für die Wanderfeldröhre wird aus einer Gleichspannungsquelle UQ gewonnen, welche einerseits mit der Mittenanzapfung der Primärwicklung wp des Transformators Tr und andererseits über je einen elektronischen Schalter S1 bzw. S2 mit den Enden der Primärwicklung wp verbunden ist. Die Schalter S1 und S2 werden abwechselnd leitend gesteuert, so daß die in Figur 1 gezeigte Schaltung als Gegentakt-Wechselrichter arbeitet.

In einem ausgeführten Beispiel beträgt der Kaltwiderstand Rf des Heizfadens ca. 1 Ohm. Der Nominalwiderstand im aufgeheizten Zustand beträgt 10 Ohm. Der nominale Heizstrom beträgt bei 10 Ohm Heizfadenwiderstand ca. J_{Fnom} ≈ 650 mA. Der maximal zulässige Heizstrom ist begrenzt auf ca. J_{Fmax} ≈ 1000 mA. Dies führt dazu, daß die Heizwendel der Wanderfeldröhre nicht im kalten Zustand an die nominale Heizwechselspannung gelegt werden darf. Es ist also eine Strombegrenzung für den Heizstrom notwendig.

Die Erfindung geht von der Tatsache aus, daß der Heiztransformator Tr, der für den Anwendungsfall einer Wanderfeldröhre ja ein Hochspannungstransformator mit einer Hochspannungsisolierung zwischen Primärwicklung wp und Sekundärwicklung ws ist, eine relativ hohe Streuinduktivität Ls in der Größenordnung von 10 µH bis ca. 30 µH besitzt. Die übliche Frequenz des Wechselstromes für die Röhrenheizung liegt zwischen 6 und 20 kHz. Die nominale Heizspannung Uf liegt zwischen 4,5 V und 5,5 V.

Wählt man nun erfindungsgemäß in der Anfangsphase während der die Heizwendel noch kalt ist für den Heizwechselstrom eine hohe Frequenz, so fällt ein Großteil der Wechselspannung an der Streuinduktivität Ls ab. Eine zusätzliche Strombegrenzung etwa über einen Längsregler ist nicht mehr erforderlich. Bei einem Ausführungsbeispiel wurde die Frequenz des Wechselstromes - Schaltfrequenz für die Schalter S1 und S2 - von ca. 200 kHz innerhalb von ca. 30 Sekunden in mehreren Stufen, z.B. 8, auf eine Nominalfrequenz von 10 kHz reduziert. Der hohe Anfangswert der Schaltfrequenz hängt von der jeweiligen Ausführung des Heiztransformators Tr bzw. dessen Streuinduktivität Ls ab. Vorteilhafterweise wird deshalb der hohe Anfangswert in Abhängigkeit der Größe der Streuinduktivität Ls so gewählt, daß in jedem Falle Röhrengrenzwerte sicher eingehalten werden. Sobald die Streuinduktivität Ls für einen Heiztransformator ermittelt ist, können für weitere Wanderfeldröhren gleiche Startbedingungen gewählt werden, da die Streuinduktivität bedingt durch den gleichen mechanischen Aufbau weiterer Transformatoren gleich bleibt.

Die Realisierung gemäß der Erfindung eignet sich insbesondere dann, wenn für andere Zwecke sowieso Digitalschaltungen in kundenspezifischen Schaltkreisen (ASICs) in der EPC (Electronic Power Conditioner) einer Satelliten-Stromversorgung vorgesehen sind. In diesem Falle kann die Steuerung für die Schalter S1 und S2 in einem solchen ASIC mitintegriert werden.

Vorzugsweise kann die Ansteuerung der Gegentakt-Schalter S1 und S2 mit einer Lückzeit erfolgen, insbesondere gemäß der EP 00 77 958 B1.

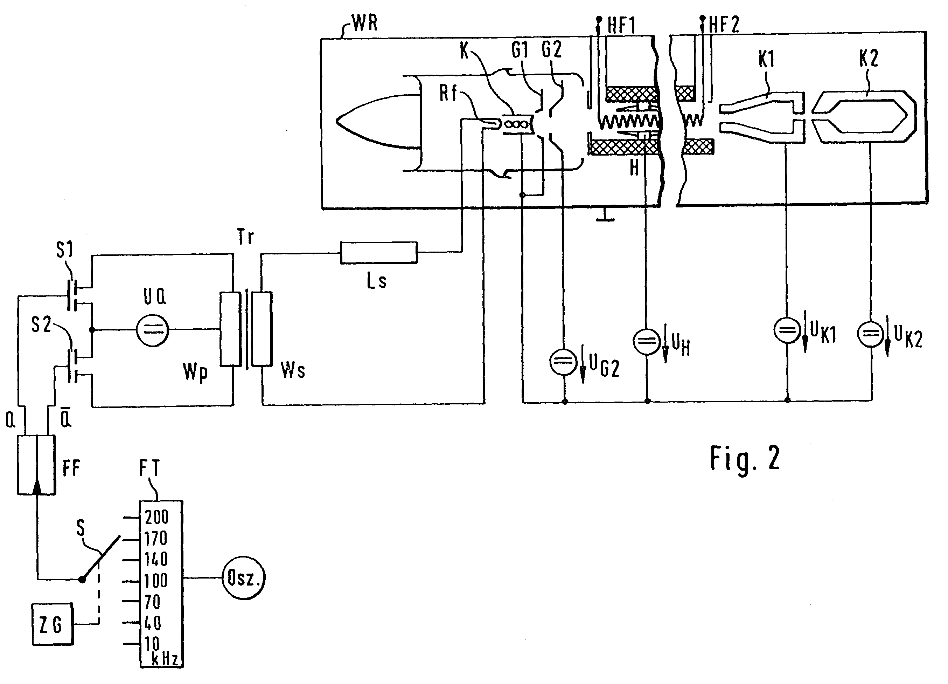

In einem Ausführungsbeispiel gemäß Figur 2 werden die Gegentaktsignale für die elektronischen Gegentaktschalter S1 und S2 hier als FETs ausgebildet von einem Oszillator Osz mit konstanter Ausgangsfrequenz abgeleitet, dessen Ausgangssignal über einen Frequenzteiler FT, welcher 8 verschieden geteilte Ausgangssignale z.B. 200 kHz, 170 kHz, 130 kHz, 100 kHz, 70 kHz, 40 kHz, 10 kHz abgibt, abgeleitet. Welche dieser Ausgangsfrequenzen an das Flip-Flop FF weitergeleitet wird bestimmt der Schalter S, welcher von einem Zeitgeber ZG gesteuert wird. Als Zeitgeber kann z.B. ein Multivibrator mit nachgeschaltetem Zähler eingesetzt werden, der während der Anheizzeit von ca. 40 Sekunden alle 5 Sekunden eine andere Frequenz zum Flip-Flop FF durchschaltet.

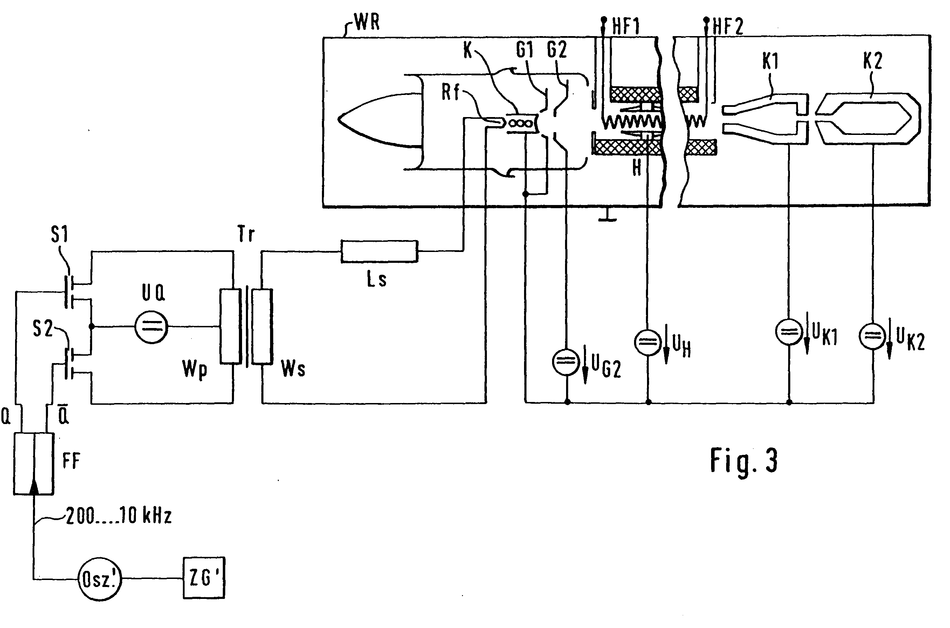

In einer weiteren Ausgestaltung (Fig. 3) wird ein Oszillator Osz' verwendet, dessen Ausgangsfrequenz in Abhängigkeit eines Zeitgebers ZG' während der Anheizzeit zwischen 200 kHz und 10 kHz variiert wird. Ein solcher Oszillator Osz' kann in Form eines VCOs mitsamt des Zeitgebers ZG', beispielsweise wieder in Form eines Multivibrators mit nachgeschaltetem Zähler, mit integrierten Standardschaltkreisen aufgebaut werden.

## Patentansprüche

1. Stromversorgung zur Versorgung der Heizwendel einer Röhre (WR), insbesondere eine Wanderfeldröhre, wobei im Heizkreis der Röhre (WR) ein Transformator (Tr) und ein Wechselrichter (S1, S2) vorgesehen ist, dadurch gekennzeichnet, daß die Frequenz des Wechselstromes während der Anheizzeit der Röhre (WR) ausgehend von einem hohen Wert auf einen niedrigen Wert herabsetzbar ist, derart daß die durch diese Frequenzänderung bedingte Änderung des induktiven Spannungsabfalls an der Streuinduktivität (LS) des Transformators (Tr) den Heizstrom begrenzt.

2. Anordnung nach Anspruch 1, dadurch gekennzeichnet, daß der hohe Anfangswert der Frequenz des Wechselstromes in Abhängigkeit der Größe der Streuinduktivität (Ls) des Transformators (Tr) gewählt ist.

3. Anordnung nach Anspruch 1 oder 2, dadurch gekennzeichnet, daß die Frequenz des Wechselstromes im Verhältnis von etwa 20:1 variierbar ist.

4. Anordnung nach einem der Ansprüche 1 bis 3, dadurch gekennzeichnet, daß die Frequenz des Wechselstromes beginnend von etwa 200 kHz innerhalb von etwa 40 Sekunden auf eine Nominalfrequenz von beispielsweise 10 kHz erniedrigbar ist.

5. Anordnung nach einem der Ansprüche 1 bis 4, dadurch gekennzeichnet, daß die Frequenz des Wechselstromes in Stufen herabsetzbar ist.

6. Anordnung nach einem der Ansprüche 1 bis 5, dadurch gekennzeichnet, daß der Transformator (Tr), über den die Röhre (WR) heizbar ist, mittels mindestens zweier elektronischer Gegentaktschalter (S1, S2) zu einem Gegentakt-Wechselrichter ergänzt ist.

## Claims

1. Power supply for supplying the heater coil of a tube (WR), in particular a travelling-wave tube, a transformer (Tr) and an invertor (S1, S2) being provided in the heater circuit of the tube (WR), characterized in that the frequency of the alternating current can be reduced during the heating time of the tube (WR) starting from a high value to a low value, in such a way that the change, due to this frequency change, in the inductive voltage drop across the stray inductance (Ls) of the transformer (Tr) limits the heating current.

2. Arrangement according to Claim 1, characterized in that the high starting value of the frequency of the alternating current is selected as a function of the magnitude of the stray inductance (Ls) of the transformer (Tr).

3. Arrangement according to Claim 1 or 2, characterized in that the frequency of the alternating current can be varied in a ratio of approximately 20:1.

4. Arrangement according to one of Claims 1 to 3, characterized in that the frequency of the alternating current, starting from approximately 200 kHz, can be decreased within approximately 40 seconds to a nominal frequency of, for example, 10 kHz.

5. Arrangement according to one of Claims 1 to 4, characterized in that the frequency of the alternating current can be reduced in stages.

6. Arrangement according to one of Claims 1 to 5, characterized in that the transformer (Tr), by which the tube (WR) can be heated, is supplemented by means of at least two electronic push-pull switches (S1, S2) to give a push-pull invertor.

## Revendications

1. Alimentation électrique de la spire chauffante d'un tube (WR) notamment d'un tube à ondes progressives, le circuit de chauffage du tube (WR) comprenant un transformateur (Tr) et un onduleur (S1, S2), caractérisée en ce que la fréquence du courant alternatif est diminuée pendant le temps de chauffage du tube (WR), en partant d'une valeur élevée à une valeur faible de sorte que cette variation de fréquence modifie la chute de tension inductive de l'inductance parasite (Ls) du transformateur (Ts) pour limiter le courant de chauffage.

2. Alimentation selon la revendication 1, caractérisée en ce que la valeur initiale élevée de la fréquence du courant alternatif est choisie en fonction de l'amplitude de l'inductance parasite du transformateur (Tr).

3. Alimentation selon la revendication 1 ou 2, caractérisée en ce qu'on modifie la fréquence du courant alternatif dans le rapport de 20:1.

4. Alimentation selon l'une des revendications 1 à 3, caractérisée en ce qu'on diminue la fréquence du courant alternatif en commençant à environ 200 kHz, en une période d'environ 40 secondes pour arriver à une fréquence nominale par exemple égale à 10 kHz.

5. Alimentation selon l'une des revendications 1 à 4, caractérisée en ce que la fréquence du courant alternatif est diminuée par paliers.

6. Alimentation selon l'une des revendications 1 à 5, caractérisée en ce que le transformateur (Tr) par lequel on chauffe le tube (WR) est complété par au moins deux commutateurs électroniques en opposition de phase (S1, S2) formant un onduleur en opposition de phase.
